# EUROPEAN PATENT APPLICATION

(11) **EP 4 641 775 A1**
(43) Date of publication of application: **29.10.2025**
(21) Application number: 24214886.4
(22) Date of filing: 22.11.2024
(51) Int. Cl.: H01M 50/103, H01M 50/176, H01M 50/188, H01M 50/553, H01M 50/562

(54) **BATTERY HOUSING ASSEMBLY AND BATTERY**

(30) Priority: 24.04.2024 CN 202420870336 U
(71) Applicant: CALB Group Co., Ltd., Changzhou City, Jiangsu Province (CN)
(72) Inventor: WANG, Ke, Changzhou City, Jiangsu Province (CN); XU, Jiuling, Changzhou City (CN)
(74) Representative: Becker, Eberhard

(57) **Abstract**

A battery housing assembly includes: a battery housing (10) provided with a pole through hole (11); and a first pole structure (30), wherein a part of the first pole structure penetrates through the pole through hole inside, and the first pole structure includes a copper layer (31) and an aluminum layer (32), wherein the first pole structure includes a connection section (33), a limiting section (34) and a protruding section (37), the limiting section is connected to a circumferential outer surface of the connection section, the protruding section is provided protruding from the connection section, the limiting section and the protruding section are formed with a step (35), and, along a direction X in which the pole through hole penetrates through the battery housing, a minimum thickness of the copper layer included in the protruding section is a, a height of the step is b, and 0.025≤a/b≤1.33.

## Description

### BACKGROUND

### Technical Field

The present disclosure relates to the technical field of batteries, and in particular to a battery housing assembly and a battery.

### Description of Related Art

In the related art, the battery may include a pole structure, and the negative pole structure may be composite formed by a copper-aluminum structure. However, due to the difference in material properties of the two materials of copper and aluminum, for example, the ductility or hardness of the two materials, etc., the copper layer in the formed pole structure may have a local thickness that is too thin, resulting in the safety risk of electrochemical corrosion of the pole assembly caused by aluminum leakage.

### SUMMARY

The present disclosure provides a battery housing assembly and a battery, so as to improve the service performance of the battery housing assembly.

An aspect of the present disclosure provides a battery housing assembly, including:
a battery housing, wherein the battery housing is provided with a pole through hole; and
a first pole structure, wherein a part of the first pole structure penetrates through the pole through hole inside, and the first pole structure includes a copper layer and an aluminum layer connected to each other,
wherein the first pole structure includes a connection section, a limiting section and a protruding section, the limiting section is connected to a circumferential outer surface of the connection section, an orthographic projection of the limiting section on a surface, provided with the pole through hole, of the battery housing is provided around the pole through hole, the protruding section is provided protruding from the connection section, the limiting section and the protruding section are formed with a step, the protruding section includes at least a part of the copper layer and a part of the aluminum layer, at least a part of the copper layer is located on a side, remote from the connection section, of the protruding section to cover the aluminum layer, and, along a direction X in which the pole through hole penetrates through the battery housing, a minimum thickness of the copper layer included in the protruding section is a, a height of the step is b, and 0.025≤a/b≤1.33.

The battery housing assembly of one embodiment of the disclosure includes a battery housing and a first pole structure, and the first pole structure is provided in the pole through hole of the battery housing. The copper layer of the first pole structure may be connected to the cell, and the aluminum layer may be used to be connected to the busbar. The limiting section of the first pole structure is connected to a circumferential outer surface of the connection section, and the protruding section is provided protruding from one side, facing the cell, of the connection section, such that the limiting section and the protruding section are formed with a step. The protruding section includes at least a part of the copper layer and a part of the aluminum layer, and, in the direction X in which the pole through hole penetrates through the battery housing, a minimum thickness of the copper layer included in the protruding section is a, and a height of the step is b. If a ratio of the minimum thickness a of the copper layer included in the protruding section to the height b of the step is too small, the copper layer is too thin, and a risk of aluminum leakage is increased, which leads to a risk of corrosion of the aluminum layer of the first pole structure, and affects the strength of the first pole structure and a overall sealing performance of the battery; if the ratio of the minimum thickness a of the copper layer included in the protruding section to the height b of the step is too large, since the positive pole and the negative pole are made of different materials, a conduction rate of aluminum is worse than that of copper, such that the copper layer is too thick, and although the strength can be guaranteed, due to the difference in transmission rates of the positive pole and the negative pole, a difference in resistance is large, the magnification and cycle performance of the battery will be reduced, and a production cost of the first pole structure will be improved. The setting of 0.025≤a/b≤1.33 can effectively reduce the risk of exposure of the aluminum layer and the service performance of the battery housing assembly can be effectively improved.

Another aspect of the disclosure provides a battery including the above-described battery housing assembly and a cell, the cell is provided in the battery housing, the copper layer is electrically connected with the cell, and at least a part of the copper layer is provided on a side, close to the cell, of the aluminum layer.

The battery of one embodiment of the disclosure includes a battery housing, a cell and a first pole structure, the cell is provided in the battery housing, the first pole structure is provided in the pole through hole of the battery housing, and the cell is electrically connected to the first pole structure. The copper layer of the first pole structure may be connected to the cell, and the aluminum layer may be used to be connected to the busbar. The limiting section of the first pole structure is connected to a circumferential outer surface of the connection section, and the protruding section is provided protruding from one side, facing the cell, of the connection section, such that the limiting section and the protruding section are formed with a step. The protruding section includes at least a part of the copper layer and a part of the aluminum layer, and, in the direction X in which the pole through hole penetrates through the battery housing, a minimum thickness of the copper layer included in the protruding section is a, and a height of the step is b. If a ratio of the minimum thickness a of the copper layer included in the protruding section to the height b of the step is too small, the copper layer is too thin, and a risk of aluminum leakage is increased, which leads to a risk of corrosion of the aluminum layer of the first pole structure, and affects the strength of the first pole structure and a overall sealing performance of the battery; if the ratio of the minimum thickness a of the copper layer included in the protruding section to the height b of the step is too large, since the positive pole and the negative pole are made of different materials, a conduction rate of aluminum is worse than that of copper, such that the copper layer is too thick, and although the strength can be guaranteed, due to the difference in transmission rates of the positive pole and the negative pole, a difference in resistance is large, the magnification and cycle performance of the battery will be reduced, and a production cost of the first pole structure will be improved. The setting of 0.025≤a/b≤1.33 can effectively reduce the risk of exposure of the aluminum layer and the service performance of the battery can be effectively improved.

### BRIEF DESCRIPTION OF THE DRAWINGS

For a better understanding of the present disclosure, reference may be made to the embodiments illustrated in the following drawings. The components in the drawings are not necessarily to scale, and related elements may be omitted to emphasize and clearly illustrate the features of the present disclosure. In addition, the associated elements or components may have different arrangements as known in the art. Further, in the drawings, like reference numerals designate identical or similar parts throughout the several views. In the drawings:
FIG. 1 is a schematic structural diagram of a battery according to an exemplary implementation;
FIG. 2 is a partial cross-sectional schematic structural diagram of a battery according to an exemplary implementation;
FIG. 3 is a partial cross-sectional schematic structural diagram of a battery according to another exemplary implementation;
FIG. 4 is a cross-sectional schematic structural diagram of a first pole structure of a battery according to an exemplary implementation;
FIG. 5 is a cross-sectional schematic structural diagram of a battery according to another exemplary implementation;
FIG. 6 is a schematic structural diagram of a cell of a battery according to an exemplary implementation; and
FIG. 7 is a schematic structural diagram of a cell of a battery according to another exemplary implementation.

### Reference numerals:

10, battery housing; 11, pole through hole; 12, fixing portion; 121, fixing section; 122, pressing section; 13, cover plate; 14, housing member; 20, cell; 21, first tab; 22, second tab; 30, first pole structure; 31, copper layer; 32, aluminum layer; 33, connection section; 34, limiting section; 35, step; 351, corner region; 36, groove; 37, protruding section; 38, plug member; 40, seal; 41, insulating member; 50, second pole structure; 60, adapter strip.

### DESCRIPTION OF THE EMBODIMENTS

The technical solutions in the exemplary embodiments of the present disclosure will be described clearly and completely in combination with the drawings in the exemplary embodiments of the present disclosure. The exemplary embodiments described herein are for illustrative purposes only and are not intended to limit the scope of the present disclosure, so it is to be understood that various modifications and changes may be made to the exemplary embodiments without departing from the scope of protection of the present disclosure.

In the description of the present disclosure, the terms "first" and "second" are used for descriptive purposes only and are not to be construed as indicating or implying relative importance unless explicitly stated or limited otherwise; the term "plurality" means two or more than two; the term "and/or" includes any and all combinations of one or more of the associated listed items. In particular, reference to "the" object or "an" object is also intended to mean one of a possible plurality of such objects.

Unless otherwise specified or indicated, the terms "connection", "fixation", and the like are to be construed broadly. For example, "connection" may be fixed, or may be detachable, or may be integral, or may be electrical, or may be connected via a signal; and the "connection" may be a direct connection or an indirect connection through an intermediary. The specific meaning of the above-mentioned terms in the present disclosure can be understood by a person skilled in the art according to specific circumstances.

Further, in the description of the present disclosure, it is to be understood that the directional terms "on", "under", "inside", "outside", and the like, as described in terms of angles shown in the drawings and should not be construed as limiting the exemplary embodiments of the present disclosure. It will also be understood that when an element or feature is referred to as being "on", "under", or "inside" or "outside" other element(s), it can not only be directly connected "on", "under", "inside" or "outside" the other element(s), but also indirectly connected "on", "under", "inside" or "outside" the other element(s) through intervening elements.

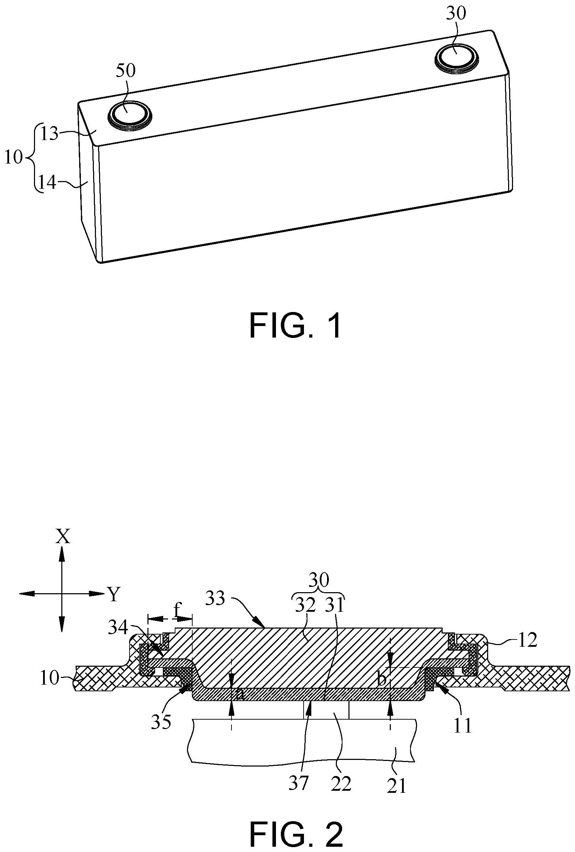

An embodiment of the disclosure provides a battery, with reference to FIGs. 1 to 7, the battery includes: a battery housing 10, wherein the battery housing 10 is provided with a pole through hole 11; and a first pole structure 30, wherein a part of the first pole structure 30 penetrates through the pole through hole 11 in side, and the first pole structure 30 includes a copper layer 31 and an aluminum layer 32 connected to each other, wherein the first pole structure 30 includes a connection section 33, a limiting section 34 and a protruding section 37, the limiting section 34 is connected to a circumferential outer surface of the connection section 33, an orthographic projection of the limiting section 34 on a surface, provided with the pole through hole 11, of the battery housing 10 is provided around the pole through hole 11, the protruding section 37 is provided protruding from the connection section 33, the limiting section 34 and the protruding section 37 are formed with a step 35, the protruding section 37 includes at least a part of the copper layer 31 and a part of the aluminum layer 32, at least a part of the copper layer 31 is located on a side, remote from the connection section 33, of the protruding section 37 to cover the aluminum layer 32, and, along a direction X in which the pole through hole 11 penetrates through the battery housing 10, a minimum thickness of the copper layer 31 included in the protruding section 37 is a, a height of the step 35 is b, and 0.025≤a/b≤1.33.

The battery housing assembly of one embodiment of the disclosure includes a battery housing 10 and a first pole structure 30, and the first pole structure 30 is provided in the pole through hole 11 of the battery housing 10. The copper layer 31 of the first pole structure 30 may be connected to the cell, and the aluminum layer 32 may be used to be connected to the busbar. The limiting section 34 of the first pole structure 30 is connected to a circumferential outer surface of the connection section 33, and the protruding section 37 is provided protruding from the connection section 33, such that the limiting section 34 and the protruding section 37 are formed with a step 35. The protruding section 37 includes at least a part of the copper layer 31 and a part of the aluminum layer 32, and, in the direction X in which the pole through hole 11 penetrates through the battery housing 10, a minimum thickness of the copper layer 31 included in the protruding section 37 is a, and a height of the step 35 is b. If a ratio of the minimum thickness a of the copper layer 31 included in the protruding section 37 to the height b of the step 35 is too small, the copper layer 31 is too thin, and a risk of aluminum leakage is increased, which leads to a risk of corrosion of the aluminum layer 32 of the first pole structure 30, and affects the strength of the first pole structure 30 and a overall sealing performance of the battery; if the ratio of the minimum thickness a of the copper layer 31 included in the protruding section 37 to the height b of the step 35 is too large, since the positive pole and the negative pole are made of different materials, a conduction rate of aluminum is worse than that of copper, such that the copper layer 31 is too thick, and although the strength can be guaranteed, due to the difference in transmission rates of the positive pole and the negative pole, a difference in resistance is large, the magnification and cycle performance of the battery will be reduced, and a production cost of the first pole structure 30 will be improved. The setting of 0.025≤a/b≤1.33 can effectively reduce the risk of exposure of the aluminum layer 32 and the service performance of the battery housing assembly can be effectively improved.

Note that, as shown in FIG. 2, the battery housing 10 is provided with the pole through hole 11, and the first pole structure 30 penetrates through the pole through hole 11 inside, such that the first pole structure 30 is fixed to the battery housing 10.

As shown in FIGs. 2 to 5, the first pole structure 30 includes a copper layer 31 and an aluminum layer 32 connected to each other, and the copper layer 31 and the aluminum layer 32 can be respectively connected to the cell 20 and the busbar. For example, the copper layer 31 can be connected to a copper tab of the cell 20, and the aluminum layer 32 can be connected to the aluminum busbar, thereby realizing the electrical connection of at least two batteries. The copper layer 31 may include pure copper or a copper alloy, and the aluminum layer 32 may include pure aluminum or an aluminum alloy, such as an aluminum manganese alloy, an aluminum magnesium alloy, or the like.

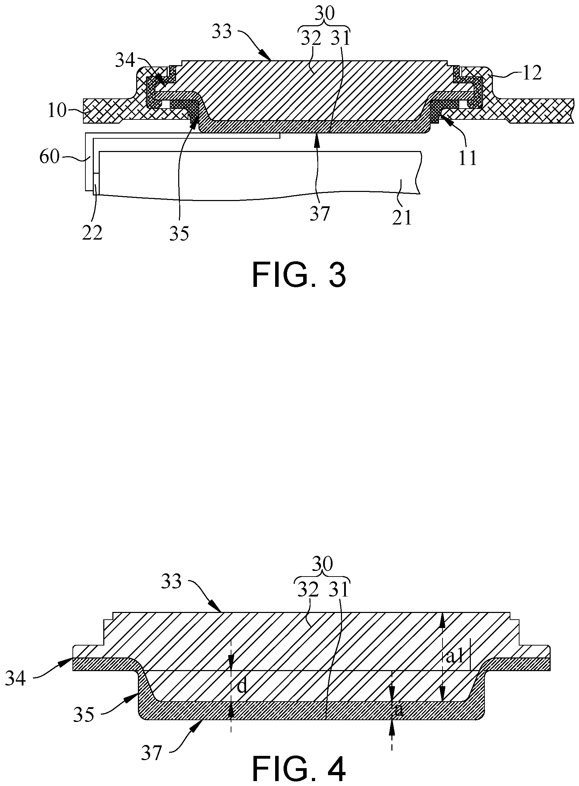

As shown in FIGs. 2 to 4, the first pole structure 30 includes a connection section 33, a limiting section 34, and a protruding section 37, the limiting section 34 is connected to the circumferential outer surface of the connection section 33, that is, the limiting section 34 extends from the circumferential outer surface of the connection section 33, and the protruding section 37 is provided protruding from one side, facing the cell 20, of the connection section 33, such that the limiting section 34 and the protruding section 37 can be formed with a step 35. At this time, it can be considered that an end face, facing the cell 20, of the limiting section 34 and the circumferential outer surface of the protruding section 37 are formed with a step 35. As shown in FIG. 4, an upper portion of the dashed line can be considered to be the connection section 33 and the limiting section 34, while a lower portion of the dashed line can be considered to be the protruding section 37, which includes a part of the copper layer 31 and a part of the aluminum layer 32.

An orthographic projection of the limiting section 34 on a surface, provided with the pole through hole 11, of the battery housing 10 is provided around the pole through hole 11, such that the limiting section 34 can be fixed to the battery housing 10 in a limited position, and the setting of the protruding section 37 can conveniently form an electrical connection between the cell 20 and the first pole structure 30, and the connection section 33 can ensure the discharge capacity of the first pole structure 30, thereby ensuring the safe use performance of the battery, and the connection section 33 can be used to form an electrical connection with other batteries through the busbar.

The protruding section 37 includes at least a part of the copper layer 31 and a part of the aluminum layer 32, and at least a part of the copper layer 31 is located on a side, remote from the connection section 33, of the protruding section 37 to cover the aluminum layer 32, thereby causing the copper layer 31 to form a protection for the aluminum layer 32, and the copper layer 31 can be provided cladding the aluminum layer 32.

As shown in FIG. 2, in the direction X in which the pole through hole 11 penetrates through the battery housing 10, the minimum thickness of the copper layer 31 included in the protruding section 37 may be a, the height of the step 35 may be b, and the ratio of the minimum thickness a of the copper layer 31 included in the protruding section 37 to the height b of the step 35 may be 0.025, 0.03, 0.035, 0.04, 0.045, 0.05, 0.06, 0.07, 0.08, 0.09, 0.1, 0.2, 0.3, 0.4, 0.5, 0.6, 0.65, 0.7, 0.75, 0.8, 0.85, 0.9, 0.95, 1, 1.05, 1.2, 1.25, 1.28, 1.3, 1.31, 1.32, or 1.33, etc.

In one embodiment, as shown in FIG. 2, the limiting section 34 is overlapped on the battery housing 10, and at least a part of the protruding section 37 penetrates through the pole through hole 11 inside, which not only facilitates the setting of the first pole structure 30, such that the limiting section 34 forms a limited connection with the battery housing 10, but also facilitates the electrical connection between the protruding section 37 and the cell 20, and shortens the connection distance between the protruding section 37 and the cell 20 to a certain extent.

The limiting section 34 is overlapped with a side, facing away from the cell 20, of the battery housing 10, that is, a part of the first pole structure 30 may be located on an outside of the battery housing 10, thereby forming a limited fixation with the battery housing 10 and improving a fixing ability of the first pole structure 30.

In one embodiment, the battery housing 10 is provided with a fixing portion 12, at least a part of the fixing portion 12 is provided around the pole through hole 11, and the fixing portion 12 fixes the first pole structure 30, thereby ensuring that the first pole structure 30 can be stably installed on the battery housing 10 and improving the safe use performance of the battery.

The fixing portion 12 may be riveted to the first pole structure 30, or the fixing portion 12 may be interference fitted to the first pole structure 30, or the fixing portion 12 may be screwed to the first pole structure 30.

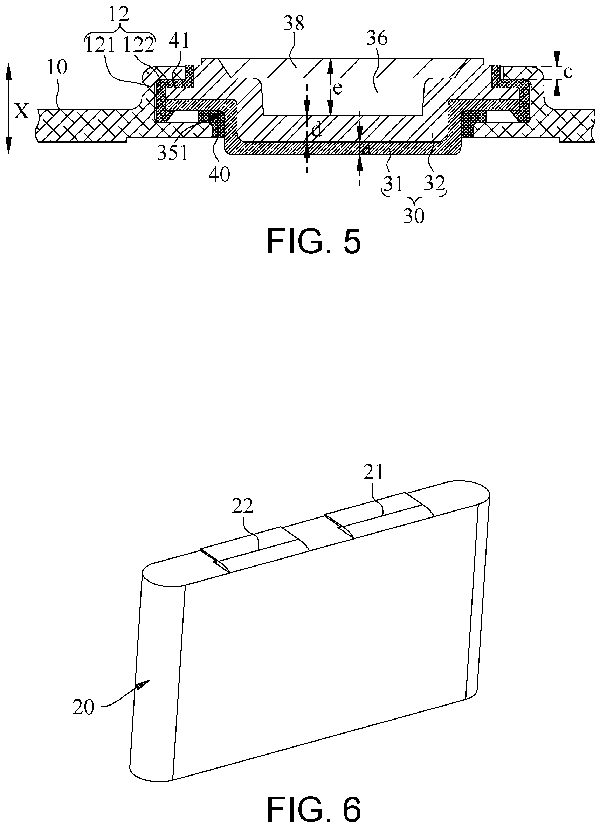

In one embodiment, as shown in FIGs. 2 and 5, the fixing portion 12 is bent into a fixing section 121 and a pressing section 122, the fixing section 121 is provided on the battery housing 10, and the pressing section 122 is pressed on the limiting section 34, such that at least a part of the limiting section 34 is sandwiched between the pressing section 122 and the battery housing 10, thereby ensuring the connection stability of the first pole structure 30, preventing the first pole structure 30 from being separated from the battery housing 10, and effectively improving the safe use performance of the battery.

As shown in FIG. 5, the battery housing 10 is provided with a fixing portion 12, and the fixing portion 12 may be welded and fixed with the battery housing 10, or the fixing portion 12 may be integrally formed to the battery housing 10. At least a part of the fixing portion 12 is provided around the pole through hole 11, thereby facilitating the fixing portion 12 to form the fixing of the first pole structure 30, and improving the assembly efficiency of the battery.

The fixing portion 12 can be bent into the fixing section 121 and the pressing section 122, such that the pressing section 122 can be pressed on the first pole structure 30, and the first pole structure 30 can be sandwiched between the pressing section 122 and the battery housing 10. At this time, a certain included angle is formed between the fixing section 121 and the pressing section 122, such that the fixing section 121 can be provided on the battery housing 10, and the pressing section 122 can be pressed on the first pole structure 30, thereby effectively preventing the first pole structure 30 from being separated from the battery housing 10 and ensuring the safe use performance of the battery.

The first pole structure 30 penetrates through the pole through hole 11 inside, thereby disposing the first pole structure 30 on the battery housing 10, and the first pole structure 30 and the battery housing 10 may be insulated. For example, the first pole structure 30 and the battery housing 10 may be insulated by an insulating structure, or the first pole structure 30 and the battery housing 10 may be insulated by an insulating coating.

In one embodiment, the ratio of the minimum thickness c of the pressing section 122 to a is 0.2-10, that is, the ratio of the minimum thickness c of the pressing section 122 to the minimum thickness a of the copper layer 31 included in the protruding section 37 may be 0.2-10. On the basis of reducing the risk that the copper layer 31 easily leaks the aluminum layer 32, it is also possible to ensure that the pressing section 122 can effectively fix and limit the first pole structure 30, and improve the safe use performance of the battery.

In combination with FIG. 5, the minimum thickness of the pressing section 122 can be expressed as c. If the ratio of the minimum thickness c of the pressing section 122 to the minimum thickness a of the copper layer 31 included in the protruding section 37 is too small, the strength of the first pole structure 30 is too high, and it is difficult to limit the pressing section 122, which is not conducive to improving the fixing performance of the first pole structure 30. If the ratio of the minimum thickness c of the pressing section 122 to the minimum thickness a of the copper layer 31 included in the protruding section 37 is too large, the copper layer 31 easily leaks out the aluminum layer 32, resulting in an increased risk of corrosion, which is not conducive to ensuring the service life of the battery.

The ratio of the minimum thickness c of the pressing section 122 to the minimum thickness a of the copper layer 31 included in the protruding section 37 may be 0.2, 0.3, 0.4, 0.5, 0.6, 0.65, 0.7, 0.75, 0.8, 0.85, 0.9, 0.95, 1, 1.05, 1.2, 1.25, 1.28, 1.3, 1.31, 1.32, 1.4, 1.5, 1.8, 2, 2.2, 2.4, 2.5, 2.8, 3, 3.2, 3.4, 3.5, 3.8, 4, 4.2, 4.4, 4.5, 4.8, 5, 5.2, 5.4, 5.5, 5.8, 6, 6.2, 6.4, 6.5, 6.8, 7, 7.2, 7.4, 7.5, 7.8, 8, 8.2, 8.4, 8.5, 8.8, 9, 9.2, 9.4, 9.5, 9.8, or 10, etc.

In one embodiment, as shown in FIG. 5, the battery housing assembly further includes a seal 40, at least a part of which is provided between the first pole structure 30 and the battery housing 10, thereby forming a sealing protection between the first pole structure 30 and the battery housing 10, and preventing an inside and an outside of the battery housing 10 from communicating through the pole through hole 11.

At least a part of the seal 40 is provided between the step 35 and the battery housing 10, step 35 has a corner region 351, at least a part of the corner region 351 is in contact with the seal 40, and a size of an R-angle of the corner region 351 is 0.12 mm-1.48 mm, which not only facilitates the forming of the corner region 351, but also ensures that the seal 40 forms a reliable seal to the first pole structure 30 and the battery housing 10, and avoids causing battery safety risks.

In combination with FIG. 5, the corner region 351 can be in contact with the seal 40, the corner region 351 of the step 35 can be regarded as a transition region between the end face, facing the cell 20, of the limiting section 34 and the circumferential outer surface of the protruding section 37, and the R-angle of the corner region 351 can be regarded as being cut along a central line direction of the first pole structure 30, thereby forming an arc line between an outer edge of the limiting section 34 and an outer edge of the protruding section 37, and a radius of the arc line is the a magnitude of the R-angle of the corner region 351.

The magnitude of the R-angle of the corner region 351 may be 0.12 mm, 0.2 mm, 0.3 mm, 0.4 mm, 0.5 mm, 0.6 mm, 0.7 mm, 0.8 mm, 0.9 mm, 1 mm, 1.1 mm, 1.2 mm, 1.3 mm, 1.4 mm, or 1.48 mm, etc. If the R-angle of the corner region 351 is too large, the sealing between the first pole structure 30 and the battery housing 10 may be affected, and the battery safety risk may be easily caused; however, if the R-angle of the corner region 351 is too small, it is not only not conducive to structure formation, but also may cause stress concentration, and may damage the seal 40, which is not conducive to sealing protection.

The first pole structure 30 is cut in a radial direction along the direction X in which the pole through hole 11 penetrates through the battery housing 10, a cut cross-section of the first pole structure 30 is placed under an image measurement instrument, and the function of measuring the radius by the image measurement instrument is used to take points at the R-angle of the corner region 351 (3 to 5 measurement points can be taken) to obtain the magnitude of the R-angle of the corner region 351.

In one embodiment, a ratio of an initial thickness of the seal 40 to the magnitude of the R-angle of the corner region 351 is 0.6-15, which not only effectively controls the sealing performance of the seal 40 between the first pole structure 30 and the battery housing 10, ensures the safe use of the battery, but also reduces the risk of leakage in aluminum layer 32 in the corner region 351.

The initial thickness of the seal 40 can be considered to be a size of a thickness obtained by releasing the seal 40 from a compressed state after the seal 40 is removed from the battery, and the aging problem caused by the long-term use of the seal 40 is not considered here.

If the ratio of the initial thickness of the seal 40 to the magnitude of the R-angle of the corner region 351 is too small, the sealing between the first pole structure 30 and the battery housing 10 is weak, and electrolyte flows out to the aluminum layer 32 to cause corrosion of the first pole structure 30, which affects the use performance of the battery; if the ratio of the initial thickness of the seal 40 to the magnitude of the R-angle of the corner region 351 is too large, and the corner region 351 is prone to the risk of aluminum leakage, and the safety risk of electrochemical corrosion may occur.

The ratio of the initial thickness of the seal 40 to the magnitude of the R-angle of the corner region 351 may be 0.6, 0.65, 0.7, 0.75, 0.8, 0.85, 0.9, 0.95, 1, 1.05, 1.2, 1.25, 1.28, 1.3, 1.31, 1.32, 1.4, 1.5, 1.8, 2, 2.2, 2.4, 2.5, 2.8, 3, 3.2, 3.4, 3.5, 3.8, 4, 4.2, 4.4, 4.5, 4.8, 5, 5.2, 5.4, 5.5, 5.8, 6, 6.2, 6.4, 6.5, 6.8, 7, 7.2, 7.4, 7.5, 7.8, 8, 8.2, 8.4, 8.5, 8.8, 9, 9.2, 9.4, 9.5, 9.8, 10, 10.2, 10.5, 10.8, 11, 11.2, 11.5, 11.8, 12, 12.2, 12.5, 12.8, 13, 13.2, 13.5, 13.8, 14, 14.2, 14.5, 14.8, or 15, etc.

In one embodiment, as shown in FIG. 5, an insulating member 41 may be provided between the battery housing 10 and the first pole structure 30.

In one embodiment, the minimum thickness of the copper layer 31 included in the protruding section 37 is a, and a size of a is 0.1 mm-2 mm, which can also be beneficial to balance current transmission rates of the positive pole and the negative pole on the basis of reducing the risk of aluminum leakage.

If the size of the minimum thickness a of the copper layer 31 included by the protruding section 37 is too small, it would result in an excessively thin thickness at the corner region 351 of the step 35 during the forming of the protruding section 37, thus resulting in an increased risk of local aluminum leakage and an increased risk of corrosion of the first pole structure 30. If the size of the minimum thickness a of the copper layer 31 included in the protruding section 37 is too large, it would result in a large difference in the current transmission rate between the positive pole and the negative pole, which is not conducive to the operation of the battery.

The size of the minimum thickness a of the copper layer 31 included by the protruding section 37 may be 0.1 mm, 0.2 mm, 0.3 mm, 0.4 mm, 0.5 mm, 0.6 mm, 0.7 mm, 0.8 mm, 0.9 mm, 1 mm, 1.1 mm, 1.2 mm, 1.3 mm, 1.4 mm, 1.5 mm, 1.6 mm, 1.7 mm, 1.8 mm, 1.9 mm, or 2 mm, etc.

In one embodiment, a height of the step 35 is b, and a size of b is 1.52 mm-3.9 mm, which not only facilitates the electrical connection between the copper layer 31 and the cell 20, but also reduces the risk of aluminum leakage, thereby ensuring the safe use performance of the battery.

If the size of the height b of the step 35 is too large, a protruding height of the protruding section 37 is relatively large, and during the thinning process of the copper layer 31 in the forming process, the local copper layer 31 is too thin and the aluminum layer 32 leaks out, causing corrosion of the first pole structure 30; if the size of the height b of the step 35 is too small, it does not facilitate the subsequent electrical connection of the copper layer 31 and the cell 20.

The size of the height b of the step 35 may be 1.52 mm, 1.6 mm, 1.7 mm, 1.8 mm, 1.9 mm, 2 mm, 2.1 mm, 2.2 mm, 2.3 mm, 2.4 mm, 2.5 mm, 2.6 mm, 2.7 mm, 2.8 mm, 2.9 mm, 3 mm, 3.1 mm, 3.2 mm, 3.3 mm, 3.4 mm, 3.5 mm, 3.6 mm, 3.7 mm, 3.8 mm, 3.85 mm, or 3.9 mm, etc.

In one embodiment, the step 35 has the corner region 351, and the ratio of the magnitude of the R-angle of the corner region 351 to a is 0.05-15, such that the cycle performance of the battery can be effectively controlled on the basis of reducing the risk of corrosion of the aluminum layer 32, and the safe use performance of the battery can be improved.

If the ratio of the magnitude of the R-angle of the corner region 351 to a is too small, it is not easy to push materials at the corner region 351, and a local position may be too thin and the risk of corrosion easily occurs. Moreover, since the positive pole and the negative pole are made of different materials, a conduction rate of aluminum is worse than that of copper, so the copper layer 31 is too thick, and although the strength can be guaranteed, the difference in resistance is large due to the different transmission rates of the positive pole and the negative pole, and the magnification and cycle performance of the battery will be reduced. The ratio of the magnitude of the R-angle of the corner region 351 to a is too large, and the copper layer 31 is too thin, so the copper layer 31 is prone to aluminum leakage, causing a risk of corrosion, and the subsequent sealing performance of the first pole structure 30 is affected because the R-angle of the corner region 351 is set to be too large.

The ratio of the magnitude of the R-angle of the corner region 351 to a may be 0.05, 0.08, 0.1, 0.15, 0.2, 0.25, 0.3, 0.35, 0.4, 0.45, 0.5, 0.55, 0.6, 0.65, 0.7, 0.75, 0.8, 0.85, 0.9, 0.95, 1, 1.05, 1.2, 1.25, 1.28, 1.3, 1.31, 1.32, 1.4, 1.5, 1.8, 2, 2.2, 2.4, 2.5, 2.8, 3, 3.2, 3.4, 3.5, 3.8, 4, 4.2, 4.4, 4.5, 4.8, 5, 5.2, 5.4, 5.5, 5.8, 6, 6.2, 6.4, 6.5, 6.8, 7, 7.2, 7.4, 7.5, 7.8, 8, 8.2, 8.4, 8.5, 8.8, 9, 9.2, 9.4, 9.5, 9.8, 10, 10.2, 10.5, 10.8, 11, 11.2, 11.5, 11.8, 12, 12.2, 12.5, 12.8, 13, 13.2, 13.5, 13.8, 14, 14.2, 14.5, 14.8, or 15, etc.

In one embodiment, the magnitude of the R-angle of the corner region 351 is 0.1 mm-1.5 mm, which not only facilitates the forming of the corner region 351 and reduces the risk of aluminum leakage, but also ensures that the first pole structure 30 and the battery housing 10 are conveniently sealed to avoid causing battery safety risks.

In one embodiment, the ratio of a to the Brinell hardness of the copper layer 31 is 0.0015 mm-0.1 mm. If the ratio of the minimum thickness a of the copper layer 31 included in the protruding section 37 to the Brinell hardness of the copper layer 31 is too small, aluminum leakage easily occurs in the corner region 351, and the Brinell hardness of the copper layer 31 is too large to push the material, such that the local material is uneven; if the ratio of the minimum thickness a of the copper layer 31 included in the protruding section 37 to the Brinell hardness of the copper layer 31 is too large, since the conduction rate of aluminum is worse than that of copper, the copper layer 31 is too thick, and although the strength can be guaranteed, the difference in resistance is large due to the difference in transmission rates between the positive pole and the negative pole, and the magnification and cycle performance of the battery will be reduced, and the overall manufacturing cost of the first pole structure 30 will be increased.

The ratio of the minimum thickness a of the copper layer 31 included in the protruding section 37 to the Brinell hardness of the copper layer 31 may be 0.0015 mm, 0.002 mm, 0.003 mm, 0.004 mm, 0.005 mm, 0.006 mm, 0.007 mm, 0.008 mm, 0.01 mm, 0.02 mm, 0.03 mm, 0.04 mm, 0.05 mm, 0.06 mm, 0.07 mm, 0.08 mm, 0.09 mm, or 0.1 mm, etc.

In one embodiment, the ratio of the Brinell hardness of the copper layer 31 to a Brinell hardness of the aluminum layer 32 is 0.4-4, which not only ensures the overall structural strength of the first pole structure 30, but also reduces the risk of aluminum leakage, thereby effectively improving the safe use performance of the first pole structure 30.

If the ratio of the Brinell hardness of the copper layer 31 to the Brinell hardness of the aluminum layer 32 is too small, after the internal cell 20 collides with the first pole structure 30, the first pole structure 30 is relatively weak, which will affect the overall structural strength; if the ratio of the Brinell hardness of the copper layer 31 to the Brinell hardness of the aluminum layer 32 is too large, it is not easy for the copper layer 31 to push materials, resulting in aluminum leakage in the corner region 351 and corrosion risk.

The ratio of the Brinell hardness of the copper layer 31 to the Brinell hardness of the aluminum layer 32 may be 0.4, 0.45, 0.5, 0.55, 0.6, 0.65, 0.7, 0.75, 0.8, 0.85, 0.9, 0.95, 1, 1.05, 1.2, 1.25, 1.28, 1.3, 1.31, 1.32, 1.4, 1.5, 1.8, 2, 2.2, 2.4, 2.5, 2.8, 3, 3.2, 3.4, 3.5, 3.8, or 4, etc.

In one embodiment, in the direction X in which the pole through hole 11 penetrates through the battery housing 10, a ratio of a minimum thickness of the aluminum layer 32 to a minimum thickness of the copper layer 31 in a region where the connection section 33 and the protruding section 37 are located is 0.5-80, and the consistency of the transmission rates of the positive pole and the negative pole can also be controlled on the basis of reducing the risk of aluminum leakage.

As shown in FIG. 4, in the direction X in which the pole through hole 11 penetrates through the battery housing 10, in the region where the connection section 33 and the protruding section 37 are located, the minimum thickness of the aluminum layer 32 can be expressed as a1, and the minimum thickness of the copper layer 31 can be expressed as a.

As shown in FIG. 5, in the direction X in which the pole through hole 11 penetrates through the battery housing 10, in the region where the connection section 33 and the protruding section 37 are located, the minimum thickness of the aluminum layer 32 can be expressed as d, and the minimum thickness of the copper layer 31 can be expressed as a.

In the region where the connection section 33 and the protruding section 37 are located, if the ratio of the minimum thickness of the aluminum layer 32 to the minimum thickness of the copper layer 31 is too large, the copper layer 31 leaks aluminum, and there is a risk of corrosion of the first pole structure 30; if the ratio of the minimum thickness of the aluminum layer 32 to the minimum thickness of the copper layer 31 is too small, resistance transmission rates of the positive pole and the negative pole of the battery do not coincide with each other.

The ratio of the minimum thickness of the aluminum layer 32 to the minimum thickness of the copper layer 31 in the region where the connection section 33 and the protruding section 37 are located may be 0.5, 0.6, 0.8, 1, 2, 3, 4, 5, 6, 7, 8, 9, 10, 11, 12, 13, 14, 15, 16, 17, 18, 19, 20, 21, 22, 23, 24, 25, 26, 28, 30, 32, 35, 38, 40, 42, 45, 48, 50, 52, 55, 58, 60, 62, 65, 68, 70, 72, 75, 78, or 80, etc.

In one embodiment, in the direction X in which the pole through hole 11 penetrates through the battery housing 10, the minimum thickness of the aluminum layer 32 included in the protruding section 37 is d, and aid is 0.03-2. On the basis of ensuring the structural strength of the protruding section 37, aluminum leakage can be avoided, and at the same time, the problem of large difference in electron transmission rates between the positive pole and the negative pole can be avoided.

As shown in FIGs. 4 and 5, in the direction X in which the pole through hole 11 penetrates through the battery housing 10, the minimum thickness of the aluminum layer 32 included in the protruding section 37 may be expressed as d, and the ratio of the minimum thickness a of the copper layer 31 included in the protruding section 37 to the minimum thickness d of the aluminum layer 32 included in the protruding section 37 may be 0.03, 0.05, 0.08, 0.1, 0.15, 0.2, 0.25, 0.3, 0.35, 0.4, 0.45, 0.5, 0.55, 0.6, 0.65, 0.7, 0.75, 0.8, 0.85, 0.9, 0.95, 1, 1.05, 1.2, 1.25, 1.28, 1.3, 1.31, 1.32, 1.4, 1.5, 1.8, or 2, etc.

In one embodiment, the copper layer 31 and the aluminum layer 32 are integrally formed and provided, and 0.03≤a/b, which not only facilitates the rapid shaping of the copper layer 31 and the aluminum layer 32, but also increases the risk of aluminum leakage at a corner of the integrally formed copper layer 31 and the aluminum layer 32. A ductility of aluminum is better, and the flow rates of the material strips during the forming process of the two is greatly different, and the risk of aluminum leakage can be effectively reduced by setting the copper layer 31 to be relatively thick, that is, the minimum thickness a of the copper layer 31 can be relatively larger.

The fact that the copper layer 31 and the aluminum layer 32 are integrally formed means that the two are formed by a common forming method after the materials of the two are prepared, such that the copper layer 31 and the aluminum layer 32 are integrally formed.

For example, cold heading forming of the first pole structure 30 or extrusion forming of the first pole structure 30 can not only reduce the overall internal resistance of the first pole structure 30, but also improve the overall manufacturing efficiency of the first pole structure 30 and reduce the cost of the first pole structure 30.

Either cold heading forming or extrusion forming can be considered as forming the first pole structure 30 in which the aluminum layer 32 and the copper layer 31 are connected by deforming and extruding the aluminum material and the copper material together. When the first pole structure 30 is cold heading formed or extrusion formed, in the process of forming the step 35, it is possible to control the situation that it is not easy for the copper layer 31 of the corner region 351 to push the materials, thereby ensuring the uniform distribution of the material to the greatest extent and reducing the risk that local excessive thinning easily causes corrosion.

In one embodiment, a side, facing away from the protruding section 37, of the first pole structure 30 is formed with a groove 36, wherein, the aluminum layer 32 forms at least a part of a groove wall of the groove 36, which not only facilitates the formation of the protruding section 37, increases the overall thickness of the protruding section 37, and avoids aluminum leakage due to the copper layer 31 being too thin, thereby improving the safe use performance of the battery.

The side, facing away from the protruding section 37, of the first pole structure 30 is formed with the groove 36, that is, the side, facing away from the cell 20, of the first pole structure 30 is formed with the groove 36.

In one embodiment, a depth e of the groove 36 in the direction X in which the pole through hole 11 penetrates through the battery housing 10 is 1.5 mm-6 mm, which can not only reduce the risk of aluminum leakage due to the copper layer 31 being too thin, but also effectively control a size of the height of the first pole structure 30, and further control a space occupancy rate of the first pole structure 30 of the battery.

As shown in FIG. 5, in the direction X in which the pole through hole 11 penetrates through the battery housing 10, the depth of the groove 36 can be expressed as e. If the depth e of the groove 36 is too small, the copper layer 31 is easily partially too thin, and the risk of aluminum leakage may occur; if the depth e of the groove 36 is too large, the overall strength of the first pole structure 30 is relatively weak, the first pole structure 30 occupies a large space of the whole battery, and the utilization rate of the overall space of the battery is low.

The depth e of the groove 36 may be 1.5 mm, 1.6 mm, 1.7 mm, 1.8 mm, 1.9 mm, 2 mm, 2.1 mm, 2.2 mm, 2.3 mm, 2.4 mm, 2.5 mm, 2.6 mm, 2.7 mm, 2.8 mm, 2.9 mm, 3 mm, 3.1 mm, 3.2 mm, 3.3 mm, 3.4 mm, 3.5 mm, 3.6 mm, 3.7 mm, 3.8 mm, 3.9 mm, 4 mm, 4.1 mm, 4.2 mm, 4.3 mm, 4.4 mm, 4.5 mm, 4.6 mm, 4.7 mm, 4.8 mm, 4.9 mm, 5 mm, 5.1 mm, 5.2 mm, 5.3 mm, 5.4 mm, 5.5 mm, 5.6 mm, 5.7 mm, 5.8 mm, 5.9 mm, or 6 mm, etc.

In one embodiment, 0.15 mm²≤a×e≤12 mm². If a product of the minimum thickness a of the copper layer 31 included in the protruding section 37 and the depth e of the groove 36 is too small, the minimum thickness a of the copper layer 31 included in the protruding section 37 is too small, or the depth e of the groove 36 is too small, the depth e of the groove 36 is small, and more material is required to ensure the thickness during the forming process of the protruding section 37, resulting in a small overall thickness in the protruding section 37, and an increased risk of aluminum leakage due to the copper layer 31 being partially too thin. If the product of the minimum thickness a of the copper layer 31 included in the protruding section 37 and the depth e of the groove 36 is too large, the first pole structure 30 occupies a large space inside the battery.

The product of the minimum thickness a of the copper layer 31 included in the protruding section 37 and the depth e of the groove 36 may be 0.15 mm², 0.2 mm², 0.3 mm², 0.4 mm², 0.5 mm², 0.6 mm², 0.7 mm², 0.8 mm², 0.9 mm², 1 mm², 1.2 mm², 1.5 mm², 1.8 mm², 2 mm², 2.5 mm², 3 mm², 3.5 mm², 4 mm², 4.5 mm² _{>} 5 mm², 5.5 mm², 6 mm², 6.5 mm², 7 mm², 7.5 mm², 8 mm², 8.5 mm², 9 mm², 9.5 mm², 10 mm², 10.5 mm², 11 mm², 11.5 mm², or 12 mm², etc.

In one embodiment, as shown in FIG. 5, a plug member 38 may be provided in the groove 36, the plug member 38 may be connected to the aluminum layer 32, and the plug member 38 may be used to be connected to the busbar.

In one embodiment, the step 35 has a corner region 351, the copper layer 31 forms at least a part of the corner region 351, and a minimum thickness, having the corner region 351, of the copper layer 31 is ≥0.01 mm, such that the risk of aluminum leakage of the copper layer 31 at the corner region 351 can be effectively reduced, thereby improving the safe use performance of the first pole structure 30.

The minimum thickness, having the corner region 351, of the copper layer 31 may be 0.01 mm, 0.05 mm, 0.08 mm, 0.1 mm, 0.2 mm, 0.3 mm, 0.4 mm, 0.5 mm, 0.6 mm, 0.7 mm, 0.8 mm, 0.9 mm, 1 mm, 1.1 mm, 1.2 mm, 1.3 mm, 1.4 mm, 1.5 mm, 1.6 mm, 1.7 mm, 1.8 mm, 1.9 mm, or 2 mm, etc.

In one embodiment, in a direction Y perpendicular to the direction in which the pole through hole 11 penetrates through the battery housing 10, a width f of the step 35 is 1.5 mm-5 mm, and the smaller the width f of the step 35, the greater the risk of aluminum leakage of the protruding section 37; the larger the width f of the step 35 is, the smaller a discharge area on a bottom surface of the first pole structure 30 is, and the local heat generation is serious, resulting in an increase in internal resistance.

In connection with FIG. 2, in the direction Y perpendicular to the direction in which the pole through hole 11 penetrates through the battery housing 10, the width of the step 35 may be expressed as f, and the width f of the step 35 may be 1.5 mm, 1.6 mm, 1.7 mm, 1.8 mm, 1.9 mm, 2 mm, 2.1 mm, 2.2 mm, 2.3 mm, 2.4 mm, 2.5 mm, 2.6 mm, 2.7 mm, 2.8 mm, 2.9 mm, 3 mm, 3.1 mm, 3.2 mm, 3.3 mm, 3.4 mm, 3.5 mm, 3.6 mm, 3.7 mm, 3.8 mm, 3.9 mm, 4 mm, 4.1 mm, 4.2 mm, 4.3 mm, 4.4 mm, 4.5 mm, 4.6 mm, 4.7 mm, 4.8 mm, 4.9 mm, or 5 mm, etc.

In one embodiment, a part of the aluminum layer 32 is located in the copper layer 31, the connection region between the aluminum layer 32 and the copper layer 31 includes a curved surface, and a/b<1.25, such that a connection strength between the aluminum layer 32 and the copper layer 31 can be ensured, and the aluminum layer 32 being affected by an interface separation between the aluminum layer 32 and the copper layer 31 can be avoided, thereby improving the safe use performance of the first pole structure 30.

As shown in FIGs. 2 to 5, a hanging corner connection region of the aluminum layer 32 and the copper layer 31 may be a curved surface, thereby ensuring the connection strength between the aluminum layer 32 and the copper layer 31.

An embodiment of the disclosure also provides a battery, the battery includes the above-mentioned battery housing assembly and a cell 20, the cell 20 is provided in the battery housing 10, the copper layer 31 is electrically connected with the cell 20, and at least a part of the copper layer 31 is provided on a side, close to the cell 20, of the aluminum layer 32.

The battery of one embodiment of the disclosure includes a battery housing 10, a cell 20 and a first pole structure 30, the cell 20 is provided in the battery housing 10, the first pole structure 30 is provided in the pole through hole 11 of the battery housing 10, and the cell 20 is electrically connected to the first pole structure 30. The copper layer 31 of the first pole structure 30 may be connected to the cell 20, and the aluminum layer 32 may be used to be connected to the busbar. The limiting section 34 of the first pole structure 30 is connected to a circumferential outer surface of the connection section 33, and the protruding section 37 is provided protruding from a side, facing the cell 20, of the connection section 33, such that the limiting section 34 and the protruding section 37 are formed with a step 35. The protruding section 37 includes at least a part of the copper layer 31 and a part of the aluminum layer 32, and, in the direction X in which the pole through hole 11 penetrates through the battery housing 10, a minimum thickness of the copper layer 31 included in the protruding section 37 is a, and a height of the step 35 is b. If a ratio of the minimum thickness a of the copper layer 31 included in the protruding section 37 to the height b of the step 35 is too small, the copper layer 31 is too thin, and a risk of aluminum leakage is increased, which leads to a risk of corrosion of the aluminum layer 32 of the first pole structure 30, and affects the strength of the first pole structure 30 and a overall sealing performance of the battery; if the ratio of the minimum thickness a of the copper layer 31 included in the protruding section 37 to the height b of the step 35 is too large, since the positive pole and the negative pole are made of different materials, a conduction rate of aluminum is worse than that of copper, such that the copper layer 31 is too thick, and although the strength can be guaranteed, due to the difference of transmission rates of the positive pole and the negative pole, a difference of resistance is large, the magnification and cycle performance of the battery will be reduced, and a production cost of the first pole structure 30 will be improved. The setting of 0.025≤a/b≤1.33 can effectively reduce the risk of exposure of the aluminum layer 32 and the service performance of the battery can be effectively improved.

In one embodiment, as shown in FIG. 1, the battery housing assembly further includes a second pole structure 50, the second pole structure 50 is provided on the battery housing 10, the cell 20 includes a first tab 21 and a second tab 22 having opposite polarities, the first tab 21 is electrically connected to the first pole structure 30, the second tab 22 is electrically connected to the second pole structure 50, the first pole structure 30 is a negative output end, and the second pole structure 50 is a positive output end, wherein an area of an end face, facing away from the cell 20, of the second pole structure 50 is larger than an area of an end face, facing away from the cell 20, of the first pole structure 30, which not only improves a discharge area of the second pole structure 50, but also makes current transmission rates of the first pole structure 30 and the second pole structure 50 balanced, reduces an internal resistance of the whole battery, and avoids local lithium precipitation caused by inconsistency of the current transmission rates of the pole pieces of the cell 20.

The first pole structure 30 is a negative output end, and the second pole structure 50 is a positive output end, that is, the first pole structure 30 may be a negative pole, and the second pole structure 50 may be a positive pole.

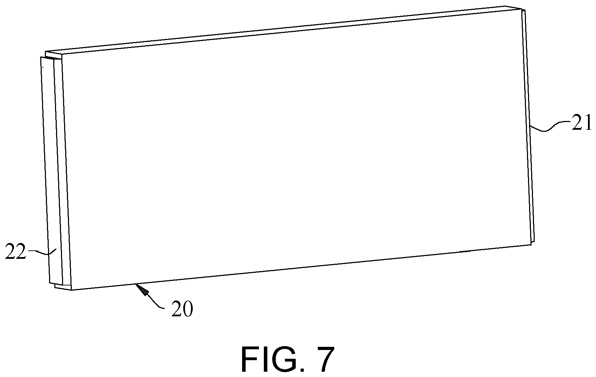

As shown in FIG. 6, the first tab 21 and the second tab 22 may extend from one same end of the cell 20, or, as shown in FIG. 7, the first tab 21 and the second tab 22 may extend from both opposite ends of the cell 20.

The first tab 21 and the second tab 22 may be directly connected to the first pole structure 30 and the second pole structure 50, respectively; alternatively, the first tab 21 and the second tab 22 may be directly connected to the first pole structure 30 and the second pole structure 50 through two adapter strips, respectively.

For example, as shown in FIG. 2, the first tab 21 may be directly connected to the first pole structure 30. Alternatively, as shown in FIG. 3, the first tab 21 may be connected to the first pole structure 30 through an adapter strip 60.

In one embodiment, the cell 20 includes a first tab 21, the first tab 21 is in direct contact and connection with the copper layer 31, the first tab 21 includes copper, and 0.028≤a/b, such that it is possible to ensure that the copper layer 31 can have a certain thickness, thereby ensuring the structural strength of the first pole structure 30 and ensuring the safe use performance of the battery.

After the first tab 21 is directly in contact and connection with the copper layer 31, the connection strength between the first tab 21 and the first pole structure 30 needs to be guaranteed. Therefore, in addition to avoiding aluminum leakage and small difference in current between the positive electrode and negative electrode, it is also necessary to take into account the overall strength of the first tab 21 and the first pole structure 30, and avoid the high proportion of the aluminum layer 32, which leads to weak strength of the first pole structure 30 and causes risks. Therefore, the ratio of the minimum thickness a of the copper layer 31 included in the protruding section 37 to the height b of the step 35 can be appropriately controlled.

The first tab 21 includes copper, and the first tab 21 is in direct contact and connection with the copper layer 31, thereby ensuring the connection strength between the first tab 21 and the copper layer 31, and facilitating the connection between the two. For example, the first tab 21 is welded and connected to the copper layer 31.

In one embodiment, as shown in FIG. 1, the battery housing 10 may include a cover plate 13 and a housing member 14, the cover plate 13 and the housing member 14 are connected to each other, and the cover plate 13 may be provided with a first pole structure 30 and a second pole structure 50.

In some embodiments, the battery housing 10 may include a cover plate 13 and a housing member 14, the cover plate 13 and the housing member 14 are connected to each other, and a first pole structure 30 and a second pole structure 50 may be provided on a side, opposite to the cover plate 13, of the housing member 14.

In some embodiments, the battery housing 10 may include a cover plate 13 and a housing member 14, the cover plate 13 and the housing member 14 are connected to each other, the cover plates 13 may be two, the two cover plates 13 may be provided opposite to each other, and the first pole structure 30 and the second pole structure 50 may be provided on the two cover plates 13, respectively.

It should be noted that the battery housing assembly may be a cover plate assembly. For example, the battery housing 10 may include the cover plate 13, and the battery housing 10 does not include the housing member 14. Alternatively, the battery housing assembly may be a cover plate assembly. For example, the battery housing 10 may include the housing member 14, and the battery housing 10 does not include the cover plate 13.

Note that the battery includes a cell and an electrolyte, and a minimum unit capable of performing an electrochemical reaction such as charge/discharge. A cell refers to a unit formed by winding or laminating a stack comprising a first pole piece, a partition material, and a second pole piece. When the first pole piece is a positive plate, the second pole piece is a negative plate. The polarities of the first pole piece and the second pole piece may be interchanged. The first pole piece and the second pole piece are coated with an active material.

In one embodiment, the battery may be a quadrangular prism battery, and the quadrangular prism battery mainly refers to a contour of a prism shape, but it is not strictly limited whether each side of the prism is necessarily a straight line in a strict sense, and the corner between the edges is not necessarily a right angle, but may be an arc transition.

The battery can be a laminated battery, which is not only convenient to assemble, but also can be processed to obtain a battery with a longer length. Specifically, the cell is a laminated cell, and the cell has first pole pieces stacked on each other, second pole pieces electrically opposite to the first pole piece, and separator pieces provided between the first pole pieces and the second pole piece, such that a plurality of pairs of the first pole pieces and the second pole pieces are stacked to form the laminated cell.

Alternatively, the battery may be a wound type battery, that is, a first pole piece, a second pole piece electrically opposite to the first pole piece, and a separator piece provided between the first pole piece and the second pole piece are wound to obtain a wound cell.

In one embodiment, the battery may be a cylindrical battery, or alternatively, the battery may be a hexagonal prism battery. The battery may be a wound type battery, that is, a first pole piece, a second pole piece electrically opposite to the first pole piece, and a separator piece provided between the first pole piece and the second pole piece are wound to obtain a wound cell.

An embodiment of the present disclosure also provides a battery pack including the above-mentioned cylindrical battery.

The battery of the battery pack of one embodiment of the disclosure includes a battery housing 10, a cell 20 and a first pole structure 30, the cell 20 is provided in the battery housing 10, the first pole structure 30 is provided in the pole through hole 11 of the battery housing 10, and the cell 20 is electrically connected to the first pole structure 30. The copper layer 31 of the first pole structure 30 may be connected to the cell, and the aluminum layer 32 may be used to be connected to the busbar. The limiting section 34 of the first pole structure 30 is connected to a circumferential outer surface of the connection section 33, and the protruding section 37 is provided protruding from a side, facing the cell 20, of the connection section 33, such that the limiting section 34 and the protruding section 37 are formed with a step 35. The protruding section 37 includes at least a part of the copper layer 31 and a part of the aluminum layer 32, and, in the direction X in which the pole through hole 11 penetrates through the battery housing 10, a minimum thickness of the copper layer 31 included in the protruding section 37 is a, and a height of the step 35 is b. If a ratio of the minimum thickness a of the copper layer 31 included in the protruding section 37 to the height b of the step 35 is too small, the copper layer 31 is too thin, and a risk of aluminum leakage is increased, which leads to a risk of corrosion of the aluminum layer 32 of the first pole structure 30, and affects the strength of the first pole structure 30 and a overall sealing performance of the battery; if the ratio of the minimum thickness a of the copper layer 31 included in the protruding section 37 to the height b of the step 35 is too large, since the positive pole and the negative pole are made of different materials, a conduction rate of aluminum is worse than that of copper, such that the copper layer 31 is too thick, and although the strength can be guaranteed, due to the difference in transmission rates of the positive pole and the negative pole, a difference in resistance is large, the magnification and cycle performance of the battery will be reduced, and a production cost of the first pole structure 30 will be improved. The setting of 0.025≤a/b≤1.33 can effectively reduce the risk of exposure of the aluminum layer 32 and the service performance of the battery pack can be effectively improved.

In one embodiment, the battery pack is a battery module or a battery pack.

The battery module includes a plurality of batteries, and the battery module may further include an end plate and a side plate, and the end plate and the side plate are used for fixing the plurality of batteries.

It should be noted that the plurality of batteries may be formed into a battery module and installed in a battery case, and the plurality of batteries may be fixed by the end plate and the side plate. The plurality of batteries may be directly provided in the battery case, that is, there is no need to group the plurality of batteries, and at this time, the end plate and the side plate may be removed.

Other implementations of the present disclosure will be apparent to a person skilled in the art from consideration of the utility model creation in the description and practice herein. The present disclosure is intended to cover any variations, uses, or adaptations of the present disclosure following, in general, the principles of the disclosure and including such departures from the present disclosure as come within common knowledge or customary practice in the art to which the disclosure pertains.

## Claims

1. A battery housing assembly, **characterized by** comprising:
a battery housing (10), wherein the battery housing (10) is provided with a pole through hole (11); and
a first pole structure (30), wherein a part of the first pole structure (30) penetrates through the pole through hole (11) inside, and the first pole structure (30) comprises a copper layer (31) and an aluminum layer (32) connected to each other,
wherein the first pole structure (30) comprises a connection section (33), a limiting section (34) and a protruding section (37), the limiting section (34) is connected to a circumferential outer surface of the connection section (33), an orthographic projection of the limiting section (34) on a surface, provided with the pole through hole (11), of the battery housing (10) is provided around the pole through hole (11), the protruding section (37) is provided protruding from the connection section (33), the limiting section (34) and the protruding section (37) are formed with a step (35), the protruding section (37) comprises at least a part of the copper layer (31) and a part of the aluminum layer (32), at least a part of the copper layer (31) is located on a side, remote from the connection section (33), of the protruding section (37) to cover the aluminum layer (32), and, along a direction X in which the pole through hole (11) penetrates through the battery housing (10), a minimum thickness of the copper layer (31) included in the protruding section (37) is a, a height of the step (35) is b, and 0.025≤a/b≤1.33.

2. The battery housing assembly according to claim 1, **characterized in that** the limiting section (34) is overlapped on the battery housing (10) and at least a part of the protruding section (37) penetrates through the pole through hole (11) inside.

3. The battery housing assembly according to claim 2, **characterized in that** the battery housing (10) is provided with a fixing portion (12), at least a part of the fixing portion (12) is provided around the pole through hole (11), and the fixing portion (12) fixes the first pole structure (30), wherein the fixing portion (12) is bent into a fixing section (121) and a pressing section (122), the fixing section (121) is provided on the battery housing (10), and the pressing section (122) is pressed on the limiting section (34) such that at least a part of the limiting section (34) is sandwiched between the pressing section (122) and the battery housing (10).

4. The battery housing assembly according to claim 3, **characterized in that** a ratio of a minimum thickness c of the pressing section (122) to a is 0.2-10.

5. The battery housing assembly according to claim 2, **characterized in that** the battery housing assembly further comprises a seal (40), and at least a part of the seal (40) is provided between the first pole structure (30) and the battery housing (10),
wherein at least a part of the seal (40) is provided between the step (35) and the battery housing (10), the step (35) has a corner region (351), at least a part of the corner region (351) is in contact with the seal (40), and a magnitude of an R-angle of the corner region (351) is 0.12 mm-1.48 mm.

6. The battery housing assembly according to claim 5, **characterized in that** a ratio of an initial thickness of the seal (40) to a magnitude of the R-angle of the corner region (351) is 0.6-15.

7. The battery housing assembly according to claim 1, **characterized in that** a size of a is 0.1 mm-2 mm, and/or a size of b is 1.52 mm-3.9 mm.

8. The battery housing assembly according to claim 1, **characterized in that** the step (35) has a corner region (351), and a ratio of a magnitude of an R-angle of the corner region (351) to a is 0.05-15.

9. The battery housing assembly according to claim 8, **characterized in that** the magnitude of the R-angle of the corner region (351) is 0.1 mm-1.5 mm.

10. The battery housing assembly according to claim 1, **characterized in that** a ratio of a to a Brinell hardness of the copper layer (31) is 0.0015 mm-0.1 mm.

11. The battery housing assembly according to claim 10, **characterized in that** a ratio of the Brinell hardness of the copper layer (31) to a Brinell hardness of the aluminum layer (32) is 0.4-4.

12. The battery housing assembly according to claim 1, **characterized in that** a ratio of a minimum thickness of the aluminum layer (32) to a minimum thickness of the copper layer (31) in a region where the connection section (33) and the protruding section (37) are located in the direction X in which the pole through hole (11) penetrates through the battery housing (10) is 0.5-80.

13. The battery housing assembly according to claim 1, **characterized in that** a minimum thickness of the aluminum layer (32) included in the protruding section (37) in the direction X in which the pole through hole (11) penetrates through the battery housing (10) is d, and aid is 0.03-2.

14. The battery housing assembly according to claim 1, **characterized in that** the copper layer (31) and the aluminum layer (32) are integrally formed and provided, and 0.03≤a/b.

15. The battery housing assembly according to claim 1, **characterized in that** a side, facing away from the protruding section (37), of the first pole structure (30) is formed with a groove (36),
wherein the aluminum layer (32) forms at least a part of a groove wall of the groove (36).

16. The battery housing assembly according to claim 15, **characterized in that** a depth e of the groove (36) in the direction X in which the pole through hole (11) penetrates through the battery housing (10) is 1.5 mm-6 mm.

17. The battery housing assembly according to claim 16, **characterized in that** 0.15 mm²≤a×e≤12 mm².

18. The battery housing assembly according to claim 1, **characterized in that** the step (35) has a corner region (351), the copper layer (31) forms at least a part of the corner region (351), and the copper layer (31) has a minimum thickness of the corner region (351) ≥0.01 mm.

19. The battery housing assembly according to claim 1, **characterized in that** a width f of the step (35) in a direction Y perpendicular to a direction in which the pole through hole (11) penetrates through the battery housing (10) is 1.5 mm-5 mm.

20. The battery housing assembly according to claim 1, **characterized in that** a part of the aluminum layer (32) is located within the copper layer (31), a connection region of the aluminum layer (32) and the copper layer (31) comprises a curved surface, and a/b is ≤1.25.

21. A battery, **characterized by** comprising the housing assembly according to any one of claims 1 to 20 and a cell (20), the cell (20) being provided within the battery housing (10), the copper layer (31) being electrically connected to the cell (20), at least a part of the copper layer (31) being provided on a side, close to the cell (20), of the aluminum layer (32).

22. The battery according to claim 21, **characterized in that** the battery housing assembly further comprises a second pole structure (50) provided on the battery housing (10), the cell (20) comprises a first tab (21) and a second tab (22) of opposite polarities, the first tab (21) is electrically connected to the first pole structure (30), the second tab (22) is electrically connected to the second pole structure (50), the first pole structure (30) is a negative output end, and the second pole structure (50) is a positive output end,
wherein an area of an end face, facing away from the cell (20), of the second pole structure (50) is larger than an area of an end face, facing away from the cell (20), of the first pole structure (30).

23. The battery according to claim 21, **characterized in that** the cell (20) comprises a first tab (21) in direct contact and connection with the copper layer (31), the first tab (21) comprises copper, and 0.028≤a/b.
